# EUROPÄISCHE PATENTANMELDUNG

(11) **EP 4 026 672 A1**
(43) Veröffentlichungstag der Anmeldung: **13.07.2022**
(21) Anmeldenummer: 21150973.2
(22) Anmeldetag: 11.01.2021
(51) Int. Cl.: B26D 7/22, B65H 26/00, B65H 26/04, B65H 63/04, B65H 63/00, B65H 51/12, F16P 1/00

(54) **SICHERHEITSVORRICHTUNG ZUR VERMEIDUNG VON ARBEITSUNFÄLLEN**

(71) Anmelder: LENZING AKTIENGESELLSCHAFT, 4860 Lenzing (AT)
(72) Erfinder: Rohringer, Robin, 4863 Seewalchen (AT); Strasser, Christian, 4873 Frankenburg am Hausruck (AT); Wimmer, Bernhard, 4871 Zipf (AT); Schöffl, Wolfgang, 4840 Vöcklabruck (AT); Pauss, Sascha, 7563 Königsdorf (AT)

(57) **Zusammenfassung**

Sicherheitsvorrichtung (1) zur Vermeidung von Arbeitsunfällen an einer Transporteinheit (2) mit zumindest einer Umlenkrolle (3), über welche laufendes Gut (4) über einen definierten Umschlingungswinkel (5) umgelenkt ist. Das laufende Gut (4) schließt beim Anlagern an die Umlenkrolle (3) mit einer Tangente des Umfangs der Umlenkrolle (4) einen Einzugsspalt (6) ein. Die Sicherheitsvorrichtung (1) weist einen Schutzkörper (7) auf, der einen parallel zu einer Rotationsachse (8) der Umlenkrolle (3) angeordneten Einzugsschutz (9) ausbildet. Der Einzugsschutz (9) deckt eine im Bereich des Einzugsspalts (6) von der Umlenkrolle (3) und dem laufenden Gut (4) begrenzte Gefahrenstelle (10) zumindest teilweise ab, wobei das Einziehen von Fremdkörpern mechanisch verhindert wird.

## Beschreibung

### Technisches Gebiet

Die gegenständliche Offenbarung betrifft eine Sicherheitsvorrichtung zur Vermeidung von Arbeitsunfällen an einer Transporteinheit mit zumindest einer Umlenkrolle, über welche laufendes Gut über einen definierten Umschlingungswinkel umgelenkt ist, wobei das laufende Gut beim Anlagern an die Umlenkrolle mit einer Mantelfläche der Umlenkrolle einen Einzugsspalt einschließt.

### Stand der Technik

Um Umlenkrollen geführte laufende Güter stellen in Produktionsbetrieben besondere Herausforderungen an die Sicherheit. So muss beispielsweise verhindert werden, dass Fremdkörper oder Körperteile von Mitarbeitern zwischen der Umlenkrolle und dem laufenden Gut "eingezogen" werden. Dies erfolgt üblicherweise durch Vorsehen entsprechender Sicherheitstüren oder -abdeckungen, die während des Betriebs geschlossen sein müssen und einen Zugriff verhindern. Die Sicherheitstüren können gegebenenfalls mit einem Not-aus-Schalter kombiniert werden oder es kann die Transportgeschwindigkeit der Anlage beim Öffnen auf einen sicheren Wert heruntergeregelt werden.

In bestimmten Fällen kann es jedoch sein, dass auch bei voller Geschwindigkeit der Anlage ein manueller Zugriff möglich sein muss. Dies ist beispielsweise bei der Herstellung von Stapelfasern, insbesondere zellulosischer Stapelfasern, der Fall. Die von einer Ausspinnvorrichtung erzeugten Endlosfilamente werden dabei als breites Faserbündel über eine Transporteinheit mit mehreren Umlenkrollen zu einer Schneidemaschine geführt, wo sie auf die gewünschte Länge geschnitten werden. Um die Transporteinheiten und Schneidemaschinen reinigen zu können, ist es erforderlich das laufende Gut (in dem Fall das Faserbündel) regelmäßig auf eine daneben angeordnete weitere Transporteinheit bzw. Schneidemaschine umzuspannen. Dies erfolgt üblicherweise bei laufendem Betrieb, wobei von einem erfahrenen und besonders geschulten Mitarbeiter das Faserbündel manuell ergriffen, mit einem Messer durchtrennt und das so entstehende Ende um die Umlenkrollen der neuen Transporteinheit gespannt und der neuen Schneidemaschine zugeführt wird. Auch beim Anspinnen, d.h. beim Starten eines neuen Extrusionsvorgangs, wird analog vorgegangen.

Während des normalen Betriebs kann ebenfalls ein Zugriff auf die rotierenden Umlenkrollen erforderlich sein, etwa um die Mantelfläche der Umlenkrollen zu reinigen oder Fremdkörper zu entfernen.

Es ist daher ein Ziel der gegenständlichen Offenbarung, die Maschinensicherheit von Transportmaschinen mit um Umlenkrollen geführten laufenden Gütern zu erhöhen und den Arbeitnehmerschutz zu verbessern.

### Kurzdarstellung

In einem ersten Aspekt betrifft die gegenständliche Offenbarung eine Sicherheitsvorrichtung zur Vermeidung von Arbeitsunfällen an einer Transporteinheit mit zumindest einer Umlenkrolle, über welche laufendes Gut über einen definierten Umschlingungswinkel umgelenkt ist, wobei das laufende Gut beim Anlagern an die Umlenkrolle mit einer Tangente des Umfangs der Umlenkrolle einen Einzugsspalt einschließt, wobei die Sicherheitsvorrichtung einen Schutzkörper aufweist, der einen im Wesentlichen parallel zu einer Rotationsachse der Umlenkrolle angeordneten Einzugsschutz ausbildet, wobei der Einzugsschutz eine im Bereich des Einzugsspalts von der Umlenkrolle und dem laufenden Gut begrenzte Gefahrenstelle zumindest teilweise abdeckt, wobei das Einziehen von Fremdkörpern mechanisch verhindert wird. Auf diese Weise wird die Anlagensicherheit erheblich verbessert. Der Begriff "zumindest teilweise abdeckt" bedeutet in diesem Zusammenhang, dass zumindest ein Teil des Einzugsschutzes in einer quer zur Laufrichtung des laufenden Gutes angeordneten Ebene den freien Bereich im Einzugsspalt einschränkt. Dadurch wird zwischen dem laufenden Gut und der bewegten Mantelfläche der Umlenkrolle eine in Laufrichtung zur Gefahrenstelle hin gerichtete Bewegung eines Fremdkörpers (z.B. einer Hand) blockiert. Eine unbeabsichtigte Bewegung des Fremdkörpers von einem sicheren Bereich außerhalb des Einzugsspalts zu der Gefahrenstelle hin wird somit verhindert. Vorzugsweise erstreckt sich der Einzugsschutz parallel zur Gefahrenstelle im Wesentlichen über die gesamte Länge des Einzugsspalts (wobei die Länge in Richtung parallel zur Rotationsachse der Umlenkrolle definiert ist).

In vorteilhafter Weise kann das laufende Gut eine Faserschar sein. Dies erlaubt einen vorteilhaften Einsatz der Sicherheitsvorrichtung etwa im Bereich der Stapelfaserproduktion.

Das laufende Gut kann einer der Transporteinheit nachgelagerten Schneidmaschine für Stapelfasern zuführbar sein, wobei die Sicherheit von Einspann- und Umspannvorgängen erhöht wird.

Der Umschlingungswinkel kann in vorteilhafter Weise 90° oder mehr betragen. Größere Umschlingungswinkel bringen höhere Gefahren mit sich, da beispielsweise eine Hand, die zwischen dem laufenden Gut und der Umlenkrolle eingezogen wird, nicht nur von der Maschine mitgezogen, sondern auch stark verdreht wird, was die Gefahr schwerer Verletzungen und damit die Sicherheitsanforderungen stark erhöht.

In vorteilhafter Weise kann der Schutzkörper an einer der Umlenkrolle zugewandten Seite eine vorzugweise konkave, insbesondere im Wesentlichen teilzylindrische Innenfläche ausbilden, welche einer Mantelfläche der Umlenkrolle gegenüberliegend angeordnet ist und diese zumindest teilweise abdeckt. Dadurch wird auch der freiliegende Bereich der Mantelfläche der Umlenkrolle außerhalb des Umschlingungswinkels abgedeckt, was die Sicherheit abermals erhöht. Die Innenfläche kann im Wesentlichen parallel zur Mantelfläche angeordnet sein, sodass zwischen Mantelfläche und Innenfläche ein Spalt regelmäßiger Dicke gebildet ist. Dies ist jedoch keine zwingende Voraussetzung und auch eine nicht konstante Spaltbreite ist möglich.

An der Innenfläche des Schutzkörpers kann in vorteilhafter Weise ein funkenvermeidendes Material, insbesondere eine Matte aus Polytetrafluorethylen (PTFE), angeordnet sein. Insbesondere in der Viskoseproduktion können sich brennbare Gase bilden, wobei das funkenvermeidende Material die Brand- bzw. Explosionsgefahr verringert. Eine Matte kann als Verschleißmaterial einfach montiert und ausgetauscht werden.

In einer vorteilhaften Ausführungsform kann der Schutzkörper an einer der Innenfläche gegenüberliegenden Außenfläche zumindest eine Versteifungsrippe aufweisen, wodurch sich die mechanische Stabilität erhöhen lässt.

In vorteilhafter Weise kann an der Umlenkrolle eine Berieselungseinheit angeordnet sein. Die Berieselungseinheit verhindert Faserbrüche und dient darüber hinaus sowohl der Reinigung der Umlenkrolle, als auch des laufenden Gutes. Ein Anhaften von Fasern an der Mantelfläche der Umlenkrolle, das zu Faserwicklern führen kann, wird verhindert. Faserwickler können einen Stillstand der Transporteinheit erzwingen oder, im Falle eines zu späten Erkennens, sogar zu mechanischen Schäden an der Anlage führen.

In vorteilhafter Weise kann die Berieselungseinheit zumindest teilweise in den Schutzkörper integriert sein. Dies erlaubt eine sehr kompakte Ausführung und es kann das Fluid nahe an der Gefahrenstelle, wo das laufende Gut mit der Manteloberfläche in Kontakt gelangt, aufgebracht werden.

In einer weiteren vorteilhaften Ausgestaltung kann zumindest ein an der Mantelfläche der Umlenkrolle angelagerter Abstreifer vorgesehen ist, welcher vorzugsweise am Schutzkörper befestigt ist.

In vorteilhafter Weise kann der Abstreifer einen stabilen Schaber und/oder eine flexible Reinigungsstruktur, wie etwa ein Reinigungsvlies oder einen Reinigungsschwamm aufweisen. Dadurch lassen sich Verschmutzungen unterschiedlicher Grade zielgerecht vermeiden bzw. entfernen.

In einer weiteren vorteilhaften Ausführungsform kann der Einzugsschutz einen im Wesentlichen keilförmigen Querschnitt aufweist, deren Spitze zur Gefahrenstelle hin ausgerichtet ist. Dadurch kann der Einzugsschutz sehr nahe an dem laufenden Gut und der Manteloberfläche der Umlenkrolle angeordnet werden. Ein geringer Abstand erleichtert wiederum das Erreichen von Sicherheitsvorgaben.

In vorteilhafter Weise kann der Einzugsschutz an der der Gefahrenstelle abgewandten Seite eine Anschlagsfläche ausbilden. Die Anschlagfläche erlaubt es etwa einem Mitarbeiter, dessen Hand vor der Gefahrenstelle versehentlich das laufende Gut berührt und von diesem mitgezogen wird, sich an dem von der Anschlagfläche gebildeten festen Halt abzustützen, um ein Einziehen in die Umlenkrolle zu verhindern.

Die Anschlagsfläche kann vorzugsweise mit dem laufenden Gut einen Winkel zwischen 60° und 120°, insbesondere zwischen 80° und 100°, einschließen, wobei der Winkel vorzugsweise 90° betragen kann. Eine solche Anschlagfläche, die in einem im Wesentlichen rechten Winkel zum laufenden Gut angeordnet ist, bietet einen Rückhalt und eine Ausweichmöglichkeit für Gegenstände oder Körperteile, beispielsweise einer Hand eines Mitarbeiters, die sich dem Gefahrenbereich versehentlich nähern.

Gemäß einer vorteilhaften Ausführungsform kann die Bruchfestigkeit des Schutzkörpers auf das Abschaltmoment eines Antriebs der Umlenkrolle ausgelegt sein, wobei im Falle einer mechanischen Verklemmung zwischen Umlenkrolle und Schutzkörper, etwa aufgrund eines Wicklers des laufenden Gutes, das Abschaltmoment erreicht wird, bevor die Bruchfestigkeit des Schutzkörpers überschritten wird. Eine derart massive Ausführung stellt sicher, dass beim Aufbauen von Material zwischen der Umlenkrolle und dem Schutzkörper, etwa bei einem Wickler, der Schutzkörper nicht mechanisch beschädigt wird, bevor die automatische Abschaltung des Antriebs (bei Überschreiben des Abschaltmoments) wirksam werden kann.

In einem weiteren Aspekt betrifft die gegenständliche Offenbarung eine Transporteinheit mit einer hierin offenbarten Sicherheitsvorrichtung.

### Kurzbeschreibung der Zeichnungen

Im Folgenden werden Ausführungsformen der Erfindung anhand der Zeichnungen beispielhaft beschrieben. Es zeigen:
- Fig. 1: eine schematische Schnittansicht einer Transporteinheit mit einer Sicherheitsvorrichtung,
- Fig. 2: eine schaubildliche Darstellung der Transporteinheit der Fig. 1,
- Fig. 3: eine Seitenansicht einer Umlenkrolle mit einer daran angeordneten Sicherheitsvorrichtung gemäß einer weiteren Ausführungsform und
- Fig. 4: eine schematische Seitenansicht einer Maschinenanordnung mit zwei nebeneinander angeordneten Schneidemaschinen und den diesen zugeordneten Transporteinheiten.

### Detaillierte Figurenbeschreibung

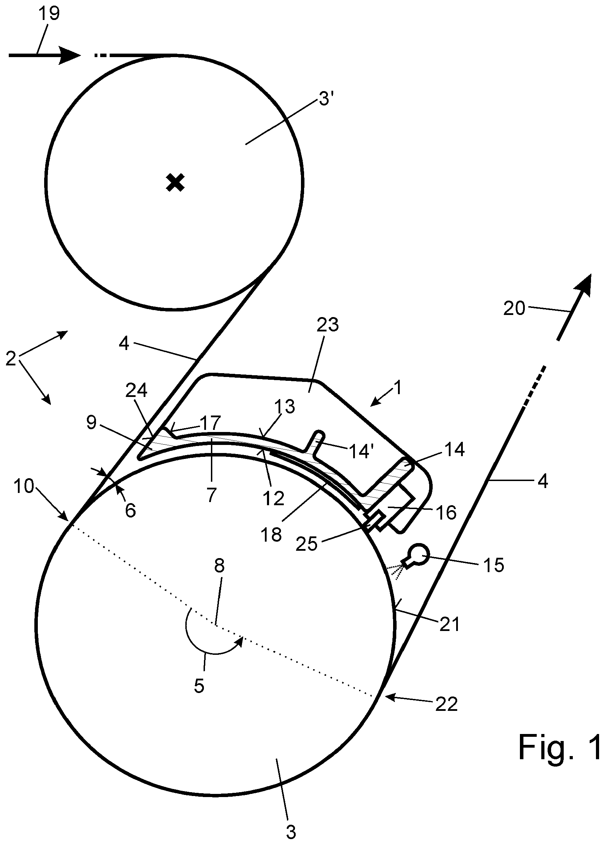

Fig. 1 zeigt in einer schematischen Schnittdarstellung eine Transporteinheit 2 für ein laufendes Gut 4, welches um mehrere Umlenkrollen 3, 3' geführt ist. Das laufende Gut 4 kann insbesondere eine Faserschar sein, die von einer Spinnvorrichtung (nicht dargestellt) erzeugt und über eine Zuführung 19 (die in Fig. 1 schematisch als Pfeil dargestellt ist) der Transporteinheit 2 zugeführt wird. Die Spinnvorrichtung kann beispielsweise eine Spinnvorrichtung zum Schmelzspinnen synthetischer Fasern oder eine Spinnvorrichtung zum Ausspinnen cellulosischer Fasern, insbesondere gemäß einem Viscose-, Modal-, oder Lyocellverfahren sein. Solche Spinnvorrichtungen sind im Fachbereich bekannt und eine detailliertere Beschreibung ist im Zusammenhang mit der gegenständlichen Offenbarung nicht erforderlich.

Das laufende Gut 4 läuft mit einer hohen Geschwindigkeit um die Umlenkrollen 3, 3', beispielsweise kann die Transportgeschwindigkeit bei einem cellulosischen Spinnverfahren etwa 40 m/s oder mehr betragen. Die Transporteinheit 2 umfasst üblicherweise mehrere Umlenkrollen, wobei in Fig. 1 lediglich zwei davon dargestellt sind, nämlich eine obere, kleinere Umlenkrolle 3' und eine untere, größere Umlenkrolle 3. Beim Anspinnen wird üblicherweise das neu ausgesponnen freie Ende der Faserschar (üblicherweise bei einer etwas verringerten Geschwindigkeit) von Hand erfasst und in die Transporteinheit 2 so eingelegt, dass das laufende Gut in der vorgesehenen Richtung über die Umlenkrollen 3', 3 geführt wird. Das freie Ende des laufenden Gutes wird dann der nachgelagerten Maschineneinheit zugeführt, beispielsweise, im Falle von Stapelfasern einer Schneidemaschine. Sobald das laufende Gut 4 richtig in die Maschine eingelegt ist, kann die Maschinengeschwindigkeit gegebenenfalls auf den Betriebswert erhöht werden.

Im Folgenden wird insbesondere auf die untere Umlenkrolle 3 eingegangen, die mit einer Sicherheitsvorrichtung 1 versehen ist. Auch wenn in Fig. 1 nur eine einzelne Sicherheitsvorrichtung 1 dargestellt ist, ist klar, dass auch an anderen Umlenkrollen oder an allen Umlenkrollen der Transporteinheit 2 ebenfalls entsprechende Sicherheitsvorrichtungen vorgesehen sein können. Das laufende Gut gelangt an einer Position, die im Zusammenhang mit der gegenständlichen Offenbarung als Gefahrenstelle 10 bezeichnet wird, in Kontakt mit der Mantelfläche 21 der Umlenkrolle 3. Bei der Gefahrenstelle 10 existiert zwischen der Mantelfläche 21 der Umlenkrolle 3 und dem laufenden Gut 4 ein keilartig zur Gefahrenstelle 10 hin spitz zulaufender Einzugsspalt 6. Das laufende Gut 4 liegt über einen Teil des Umfangs der Umlenkrolle 3 an der Mantelfläche 21 an, wobei der Winkel zwischen der Gefahrenstelle 10 und dem hierin als Trennstelle 22 bezeichneten Punkt, wo das laufende Gut 4 die Umlenkrolle 3 wieder verlässt, im Zusammenhang mit der gegenständlichen Offenbarung als Umschlingungswinkel 5 bezeichnet wird. Im in Fig. 1 dargestellten Fall beträgt der Umschlingungswinkel 5 etwas mehr als 180°, d.h. an mehr als der Hälfte der Mantelfläche 21 der Umlenkrolle 3 ist laufendes Gut 4 angelagert. Je nach Ausführungsform der Anlage kann sich der Umschlingungswinkel 5 stark unterscheiden, wobei der Fachmann bei Kenntnis der hierin offenbarten Lehren von sich aus in der Lage ist, die Sicherheitsvorrichtung 1 an die vorgegebenen Verhältnisse anzupassen.

Dem Umschlingungswinkel 5 kommt hinsichtlich der Betriebssicherheit eine wichtige Bedeutung zu, da ein Gegenstand, der bei der Gefahrenstelle 10 zwischen dem laufenden Gut 4 und der Mantelfläche 21 eingezogen wird, üblicherweise bis zur Trennstelle 22 mitgezogen wird, bevor er wieder befreit werden kann. Dabei wird der Gegenstand (also beispielsweise die Hand eines Mitarbeiters) nicht nur um die Strecke zwischen der Gefahrenstelle und der Trennstelle 22 mitgerissen, sondern auch um diesen Umschlingungswinkel 5 verdreht. Diese Verdrehung erhöht jedoch das Risiko schwerer Verletzungen bei einem derartigen Unfall, wobei das Verletzungsrisiko ab einem Umschlingungswinkel von etwa 90° sehr stark ansteigt.

Üblicherweise ist die Transporteinheit 2 während des Betriebs durch eine geschlossene Schutzabdeckung oder ein Schutzfenster gesichert. Beispielsweise zum Anspinnen oder für Reinigungs- und Wartungseingriffe muss es jedoch auch möglich sein, die Schutzabdeckung auch bei laufendem Betrieb zu öffnen, um die entsprechenden Tätigkeiten vornehmen zu können.

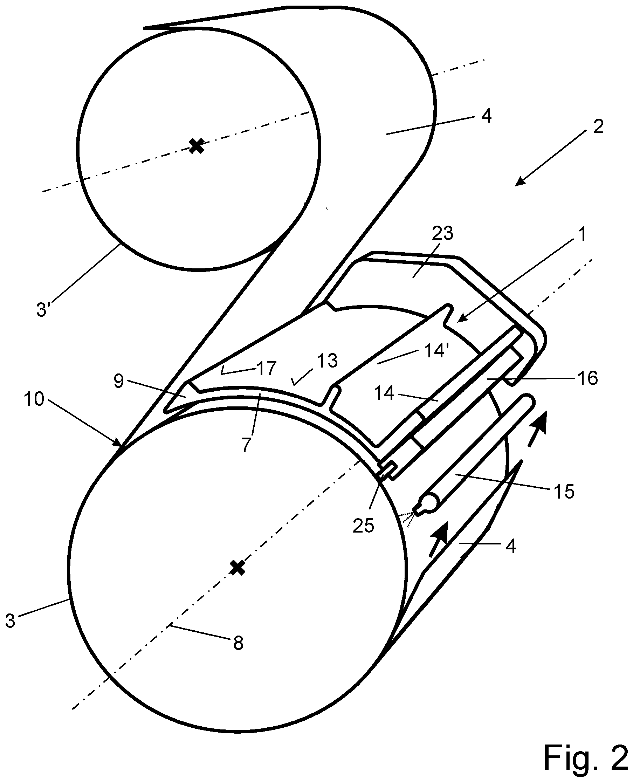

Um die Gefahrenstelle 10 gegen ein Einziehen von Gegenständen und Körperteilen zu sichern, ist an der Umlenkrolle 3 an dem Bereich der freien Mantelfläche 21 der Umlenkrolle 3 eine Sicherheitsvorrichtung 1 angeordnet. Die Sicherheitsvorrichtung 1 ist in Fig. 1 in einer Schnittdarstellung (wobei die Schnittebene quer zur Rotationsachse 8 der Umlenkrolle 3 verläuft) und in Fig. 2 in einer schaubildlichen Darstellung gezeigt.

Die Sicherheitsvorrichtung 1 weist eine Montagebasis 23 auf, die ortsfest montiert ist, beispielsweise kann sie an derselben Montagestruktur bzw. Rückwand befestigt sein, an der auch die Umlenkrolle 3 montiert ist. Von der Montagebasis 23 im Wesentlichen parallel zur Rotationsachse 8 abstehend ist ein Schutzkörper 7 angeordnet. Der Schutzkörper 7 weist eine teilzylindrische Innenfläche 12 auf, die im Wesentlichen parallel zur Mantelfläche 21 angeordnet und von dieser beabstandet ist. Eine der Innenfläche 12 gegenüberliegende Außenfläche 13 kann ebenfalls eine im Wesentlichen teilzylindrische Form aufweisen, die parallel zur Innenfläche 12 verläuft, sodass der Schutzkörper 7 eine im wesentlichen plattenartig ausgebildete, zylindrisch gekrümmte Grundform aufweist.

Der Schutzkörper 7 kann mit der Montagebasis 23 lösbar verbunden (etwa mit Schrauben oder Nieten), unlösbar verbunden (beispielsweise mit einer Klebe- und/oder Schweißstelle) oder mit diesem einteilig ausgebildet sein (etwa als ein Gussteil).

Die Sicherheitsvorrichtung besteht vorzugsweise aus einem stabilen, bearbeitbaren Material, insbesondere Stahl, Edelstahl oder Aluminium. Gegebenenfalls kann im Wesentlichen die gesamte Sicherheitsvorrichtung 1 oder Teile davon, insbesondere die Montagebasis 23 und/oder der Sicherheitskörper 7, aus einem Metall, wie etwa Stahl oder Aluminium, oder aus geeigneten Metalllegierungen gefertigt sein. Aufgrund der erreichbaren Stabilität und der Kosten ist die Verwendung von Stahl bevorzugt. Gegebenenfalls könnten zumindest Teile der Sicherheitsvorrichtung 1 aus Kunststoffen gefertigt sein oder es kann im Wesentlichen die gesamte Sicherheitsvorrichtung 1 aus Kunststoff(en) gefertigt sein. Dies erlaubt eine kostengünstige Herstellung, wobei durch die Auswahl an (Kunststoff-) Werkstoffen sichergestellt werden muss, dass die Sicherheitsvorrichtung 1 und davon insbesondere der Schutzkörper 7 eine ausreichende mechanische Stabilität aufweist. Beispielsweise kann ein Schutzkörper 7 aus einem Kunststoff auf stabile Montagestäbe, Schienen oder Formkörper (nicht dargestellt) aufgeschoben werden, die an der Montagebasis 23 montiert sind und von dieser im Wesentlichen parallel zur Rotationsachse 8 nach vorne hin abstehen. Die Montagestäbe können dabei dem Schutzkörper 7 aus Kunststoff eine zusätzlich Stabilität verleihen. Der gesamte Schutzkörper 7 könnte dadurch als kostengünstiger und leicht austauschbarer Verschleißteil hergestellt werden. Beispielsweise kann die Sicherheitsvorrichtung 1 auch in einer modularen Bauweise hergestellt werden.

An der Außenfläche 13 sind Versteifungsrippen 14, 14' angeordnet, die parallel zur Rotationsachse 8 verlaufen und von der zylindrischen Außenfläche 13 radial nach Außen hin abstehen. Die Versteifungsrippen 14, 14' verstärken einerseits die Verbindung zwischen der Montagebasis 23 und dem Schutzkörper 7, andererseits verbessern sie die Stabilität des Schutzkörpers 7 und verhindern ein Verformen bzw. Verbiegen desselben bei mechanische Beanspruchung.

An seinem der Gefahrenstelle 10 zugewandten Rand weist der Schutzkörper 7 einen Einzugsschutz 9 auf, der sich im Wesentlichen parallel zum linearen Verlauf der Gefahrenstelle 10 in dem Einzugsspalt 6 erstreckt. Der Einzugsschutz 9 weist einen im Wesentlichen keilförmigen Querschnitt auf, der an die Form des Einzugsspalts 6 angepasst ist und dessen spitz zulaufendes Ende zur Gefahrenstelle 10 hin ausgerichtet ist. Am gegenüberliegenden Ende bildet der Einzugsschutz 9 eine Anschlagsfläche 17 aus, die im Wesentlichen normal auf die Ebene ausgerichtet ist, in der das laufende Gut 4 zur Umlenkrolle 3 geführt wird. Eine der Innenseite 12 gegenüberliegende Seitenfläche 24 des Einzugsschutzes 9 ist im Wesentlichen parallel zur Ebene des laufenden Guts 4 angeordnet. Der Abstand zwischen der Seitenfläche 24 und dem laufenden Gut 4 kann entsprechend den Dimensionen der Anlage gewählt werden und beträgt vorzugsweise weniger als 6 mm. Die Anschlagfläche 17 erlaubt es in Verbindung mit dem geringen Abstand einem Mitarbeiter, dessen Hand das laufende Gut 4 berührt und von diesem mitgezogen wird, sich an der Anschlagfläche 17 abzustützen und dadurch zu vermeiden, das die Hand bis unmittelbar zur Gefahrenstelle 10 gelangt und dort zwischen Umlaufrolle 3 und laufendem Gut 4 eingeklemmt und mitgezogen wird.

Als ein Kriterium für die mechanische Stabilität der Sicherheitsvorrichtung 1 muss sichergestellt sein, dass diese ein solches Abstützen ohne zu Brechen und im Wesentlichen ohne nachzugeben aufnehmen kann. Vorzugsweise erfüllt die Stabilität der Sicherheitsvorrichtung 1 zusätzlich jedoch noch ein weiteres Kriterium der mechanischen Stabilität, welches auf das Antriebsmoment und/oder das Abschaltmoment der Umlenkrolle 3 ausgelegt ist. Insbesondere kann die Bruchfestigkeit des Schutzkörpers so auf das Abschaltmoment eines Antriebs der Umlenkrolle ausgelegt sein, dass im Falle einer mechanischen Verklemmung zwischen Umlenkrolle und Schutzkörper das Abschaltmoment erreicht wird, bevor die Bruchfestigkeit des Schutzkörpers überschritten wird. Eine solche mechanische Verklemmung kann beispielsweise durch einen sogenannten "Wickler" oder "Faserwickler" entstehen. Bei einem solchen haften einzelne Fäden des laufenden Gutes an der Umlenkrolle 3, reißen ab und werden um die Umlenkrolle 3 herumgewickelt. Bei jeder Umdrehung der Umlenkrolle 3 baut sich so zunehmend Material auf und es vergrößert sich der entstehende Wickler, bis das Material zwischen dem Schutzkörper 7 und der Mantelfläche 21 keinen Platz mehr findet und sich verklemmt, wobei ein rasch ansteigendes Bremsmoment erzeugt wird. Dabei wirkt auch eine starke radiale Kraftkomponente auf den Schutzkörper 7, die insbesondere von der ersten, größeren Versteifungsrippe 14 aufgenommen wird. Das Bremsmoment wird schließlich so stark, dass das Abschaltmoment überschritten und die Transporteinheit abgeschaltet wird. Die stabile Ausführung der Sicherheitsvorrichtung 1 stellt sicher, dass bei einem solchen Vorfall keine mechanischen Schäden auftreten und die Transporteinheit 2 nach einer entsprechenden Reinigung wieder in Betrieb gesetzt werden kann.

Zusätzlich kann die Sicherheitsvorrichtung 1 weitere Vorrichtungen aufweisen, die das Auftreten von Wicklern weitgehend vermeiden. An dem in Fig. 1 und 2 dargestellten Schutzkörper 7 ist an einer äußeren Seitenfläche der ersten Versteifungsrippe 14 ein Abstreifer 16 angeordnet, der mit zumindest einem Reinigungselement 25 an der rotierenden Oberfläche angelagert ist. Das Reinigungselement 25 kann beispielsweise eine flexible Reinigungsstruktur oder ein stabiler Schaber sein. Gegebenenfalls können sowohl ein oder mehrere flexible Reinigungsstruktur/en und ein oder mehrere Schaber kombiniert vorgesehen sein. Die flexible Reinigungsstruktur kann beispielsweise eine Wischerlippe aus Gummi oder einem anderen Polymermaterial, einen Schwammkörper oder ein Reinigungsvlies aufweisen.

Im Bereich zwischen der Trennstelle 22, wo das laufende Gut 4 sich von der Mantelfläche 21 der Umlenkrolle 3 löst, und der Stelle, wo das Reinigungselement 25 an der Mantelfläche 21 angreift, ist eine Berieselungseinheit 15 angeordnet, über die ein Fluid auf die Mantelfläche 21 aufgesprüht wird. Das Fluid rinnt über die Mantelfläche 21 herunter bis zur Trennstelle 22 und verhindert dort das Anhaften von Fasern auf der Mantelfläche 21. Die Berieselungseinheit 15 kann zusätzlich oder alternativ auch an einer anderen geeigneten Stelle angeordnet oder in den Schutzkörper 7 oder den Abstreifer 16 integriert sein.

An der der Mantelfläche 21 zugewandten Innenfläche 12 des Schutzkörpers 7 kann eine Matte 18 vorgesehen sein, die ein funkenvermeidendes Material aufweist. Dies verhindert das Entstehen von Funken durch statische Aufladung, da diese unter bestimmten Bedingungen eine Brand- oder Explosionsgefahr darstellen können. Dies ist insbesondere dann vorteilhaft, wenn das laufende Gut 4 aus cellulosischen Fasern besteht, die gemäß einem Viskoseverfahren hergestellt wurden, da hierbei brennbare Gase entstehen können. Die Matte 18 kann sich entweder über einen Teil der Innenfläche 12 oder im Wesentlichen über die gesamte Innenfläche 12 erstrecken. Anstelle der Matte 18 kann auch eine entsprechende Beschichtung oder ähnliches vorgesehen sein. Gegebenenfalls kann auch der Schutzkörper 7 teilweise oder vollständig aus einem funkenvermeidenden Material, insbesondere einem Kunststoff gefertigt sein, wobei der Kunststoff zumindest an der Innenfläche 12 angeordnet ist.

Bei der Auswahl des Kunststoffs und der Gestaltung des Schutzkörpers 7 ist dabei auf die mechanische Stabilität zu achten.

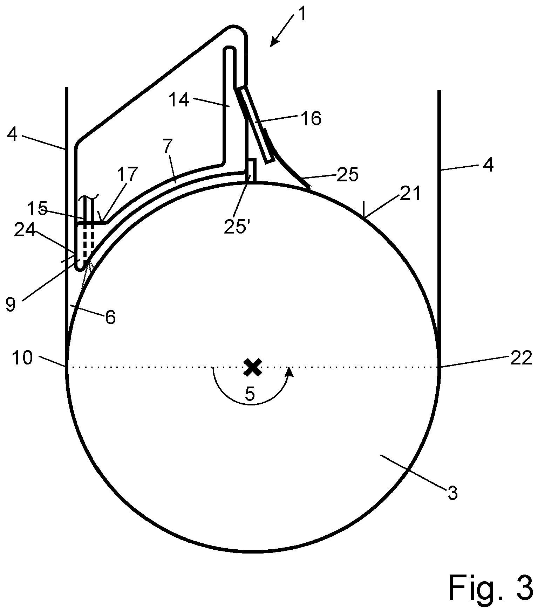

Fig. 3 zeigt die Sicherheitsvorrichtung 1 gemäß einer weiteren Ausführungsform, die an einer Umlenkrolle 3 für ein laufendes Gut 4 angeordnet ist. Der Umschlingungswinkel 5 beträgt in diesem Fall 180°, wobei das laufende Gut 4 vertikal von oben kommend bei der Gefahrenstelle 10 an der Mantelfläche 21 der Umlenkrolle 3 in Anlagerung gelangt und sich bei der Trennstelle 22 wieder von dieser löst und vertikal nach oben abgeleitet wird. Die Sicherheitsvorrichtung 1 ist wiederum so montiert, dass deren Schutzkörper 7 über der freien Mantelfläche 21 der Umlenkrolle 3 angeordnet ist, wobei der Einzugsschutz 9 in den Einzugsspalt 6 hineinragt und mit der Spitze zur Gefahrenstelle 10 hin ausgerichtet ist. Der Einzugsschutz 9 weist eine im Wesentlichen vertikalen Seitenfläche 24 und eine im Wesentlichen horizontale Anschlagsfläche 17 auf, wobei die Seitenfläche 24 parallel zur Transportebene der Faserschar 4 verläuft und einen definierten Abstand zu dieser aufweist, der insbesondere weniger als 6 mm beträgt.

Der Schutzkörper 7 der in Fig. 3 dargestellten Ausführungsform überdeckt nur einen Teilbereich der freien Mantelfläche 21, nämlich insbesondere den zur Gefahrenstelle 10 hin abfallenden Teil. Der Schutzkörper 7 weist am seinem dem Einzugsschutz 9 gegenüberliegenden Ende eine Versteifungsrippe 14 auf, wobei je nach Bedarf zusätzliche Versteifungsstrukturen bzw. Versteifungsrippen vorgesehen sein können.

Die Versteifungsrippe 14 weist an ihrer äußeren Seitenfläche eine Abschrägung auf, an der ein Abstreifer 16 montiert ist. Der Abstreifer 16 ragt dabei über die Kante der Abschrägung hinaus, wobei an dem abstehenden Ende des Abstreifers 16 ein Reinigungselement 25 angeordnet ist. Das Reinigungselement 25 kann beispielsweise eine Schaberstruktur sein, die im Wesentlichen aus einer Blechzunge besteht, die an dem Abstreifer 16 als Verschleißteil lösbar befestigt ist. Durch die Montage kann die Durchbiegung des Reinigungselements 25 und damit die Anpresskraft eingestellt werden.

Zusätzlich ist ein weiteres Reinigungselement 25' direkt an der Versteifungsrippe 14 angeordnet und sichert dabei den Spalt zwischen dem Schutzkörper 7 und der Mantelfläche 21 gegen Verschmutzungen. Das weitere Reinigungselement 25' kann beispielsweise ein Schaumstoff- oder Vliesstreifen sein.

Die Sicherheitsvorrichtung 1 der Fig. 3 weist eine Berieselungseinheit 15 auf, die in einem Bereich nahe der Gefahrenstelle 10 angeordnet ist und die in den Einzugsschutz 9 integriert ist. Dazu können beispielsweise entsprechende Bohrungen und Ausnehmungen im Einzugsschutz 9 vorgesehen sein. Die Berieselungseinheit 15 weist eine oder mehrere Düsen auf, die sich an der Innenfläche 12 befinden und über die das Fluid unmittelbar oberhalb der Gefahrenstelle 10, wo das laufende Gut 4 an der Mantelfläche 21 in Anlagerung gerät, auf die Mantelfläche 21 aufgesprüht wird. Gegebenenfalls kann zusätzlich oder alternativ eine weitere Berieselungseinheit an der gegenüberliegenden Seite der Umlenkrolle 3 angeordnet sein, wenn dies vorteilhaft ist.

Die in Fig. 3 dargestellte Sicherheitsvorrichtung 1 weist zahlreiche Merkmale auf, die bereits im Zusammenhang mit der Beschreibung den Fig. 1 und 2 detailliert dargelegt wurden. Der Übersichtlichkeit halber wird auf eine nochmalige detaillierte Beschreibung solcher Merkmale verzichtet. Der Fachmann ist jedoch von sich aus in der Lage, einzelne Merkmale, die nur in einzelner der beispielhaften Ausführungsformen offenbart oder detailliert beschrieben sind, sinngemäß mit den anderen Ausführungsformen zu kombinieren. Dies gilt sowohl für gemeinsam offenbarte Merkmalsgruppen, als auch für einzelne Merkmalen, die aus solchen Gruppen ohne Mitnahme der anderen Merkmale herausgelöst werden, sofern dies technisch sinnvoll und möglich ist. Derartige Merkmalskombinationen können insbesondere auch zur Kennzeichnung der Erfindung herangezogen werden.

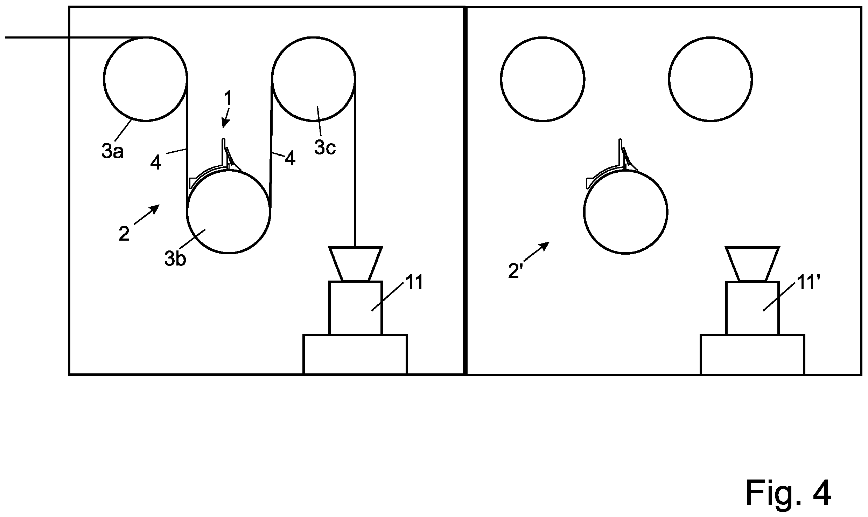

Fig. 4 zeigt einen Teil einer Anlage zur Erzeugung von Stapelflasern, wobei zwei Schneideeinheiten 11, 11' mit jeweils einer zugeordneten Transporteinheit 2, 2' nebeneinander angeordnet sind. Eine solche Anordnung kann verwendet werden, um ein Faserbündel, welches als laufendes Gut 4 zu Stapelfasern geschnitten werden soll, während des Betriebs von der gerade verwendeten Schneideeinheit 11 auf die andere, neue Schneideeinheit 11' umspannen zu können. Dabei wird, gegebenenfalls bei verringerter Vorschubgeschwindigkeit, das Faserbündel üblicherweise von Hand erfasst, durchgeschnitten und das so entstandene freie Ende in die neue Transporteinheit 2' eingespannt und der entsprechenden neuen Schneideeinheit 11' zugeführt. Nach dem Umspannen kann die vorher verwendete, jetzt unbenutzte Schneideeinheit 11 gewartet und gereinigt werden. Der Produktionsprozess kann dabei ohne Unterbrechung weiterlaufen.

Beide Transporteinheiten 2, 2' weisen jeweils zwei obere Umlenkrollen 3a, 3c und eine untere Umlenkrolle 3b auf, wobei an den unteren Umlenkrollen jeweils eine Sicherheitsvorrichtung 1, 1' vorgesehen ist. Im dargestellten Fall entsprechen die Sicherheitsvorrichtungen 1, 1' im Wesentlichen der in Fig. 3 dargestellten Ausführungsform. Gegebenenfalls können auch an einer oder beiden der oberen Umlenkrollen 3a, 3c entsprechende Sicherheitsvorrichtungen angeordnet sein, die größte Unfallgefahr besteht jedoch bei der unteren Umlenkrolle 3b, daher ist bei diesen das Vorsehen einer Sicherheitsvorrichtung 1 besonders wichtig.

Die obige Beschreibung der Sicherheitsvorrichtung wurde insbesondere in Zusammenhang mit einer Transporteinheit für Faserscharen beschrieben. Sie ist jedoch vorteilhaft auch auf andere Bereiche anwendbar, bei denen ein laufendes Gut um eine Umlenkrolle geführt werden muss, sodass sich ein Gefahrenbereich bildet, der gegen ein Einziehen geschützt werden muss. Insbesondere ist die Sicherheitsvorrichtung für Anlagen geeignet, bei denen ein manueller Zugriff während des Betriebs (d.h. bei laufender Rolle) möglich sein muss.

### Bezugszeichen:

Sicherheitsvorrichtung 1
Transporteinheit 2
Umlenkrolle 3
laufendes Gut 4
Umschlingungswinkel 5
Einzugsspalt 6
Schutzkörper 7
Rotationsachse 8
Einzugsschutz 9
Gefahrenstelle 10
Schneidmaschine 11
Innenfläche 12
Außenfläche 13
Versteifungsrippe 14
Berieselungseinheit 15
Abstreifer 16
Anschlagsfläche 17
Matte 18
Zuführung 19
Ableitung 20
Mantelfläche 21
Trennstelle 22
Montagebasis 23
Seitenfläche 24
Reinigungselement 25

## Patentansprüche

1. Sicherheitsvorrichtung (1) zur Vermeidung von Arbeitsunfällen an einer Transporteinheit (2) mit zumindest einer Umlenkrolle (3), über welche laufendes Gut (4) über einen definierten Umschlingungswinkel (5) umgelenkt ist, wobei das laufende Gut (4) beim Anlagern an die Umlenkrolle (3) mit einer Mantelfläche (21) der Umlenkrolle (4) einen Einzugsspalt (6) einschließt, **dadurch gekennzeichnet, dass** die Sicherheitsvorrichtung (1) einen Schutzkörper (7) aufweist, der einen im Wesentlichen parallel zu einer Rotationsachse (8) der Umlenkrolle (3) angeordneten Einzugsschutz (9) ausbildet, wobei der Einzugsschutz (9) eine im Bereich des Einzugsspalts (6) von der Umlenkrolle (3) und dem laufenden Gut (4) begrenzte Gefahrenstelle (10) zumindest teilweise abdeckt, wobei das Einziehen von Fremdkörpern mechanisch verhindert wird.

2. Sicherheitsvorrichtung (1) nach Anspruch 1, **dadurch gekennzeichnet, dass** das laufende Gut (4) eine Faserschar ist.

3. Sicherheitsvorrichtung (1) nach Anspruch 2, **dadurch gekennzeichnet, dass** das laufende Gut (4) einer der Transporteinheit (2) nachgelagerten Schneidmaschine (11) für Stapelfasern zuführbar ist.

4. Sicherheitsvorrichtung (1) nach einem der Ansprüche 1 bis 3, **dadurch gekennzeichnet, dass** der Umschlingungswinkel (5) 90° oder mehr beträgt.

5. Sicherheitsvorrichtung (1) nach einem der Ansprüche 1 bis 4, **dadurch gekennzeichnet, dass** der Schutzkörper (7) an einer der Umlenkrolle (3) zugewandten Seite eine vorzugweise konkave, insbesondere im Wesentlichen teilzylindrische Innenfläche (12) ausbildet, welche einer Mantelfläche der Umlenkrolle (3) gegenüberliegend angeordnet ist und diese zumindest teilweise abdeckt.

6. Sicherheitsvorrichtung (1) nach Anspruch 5, **dadurch gekennzeichnet, dass** an der Innenfläche (12) ein funkenvermeidendes Material, insbesondere eine Matte (18) aus Polytetrafluorethylen (PTFE), angeordnet ist.

7. Sicherheitsvorrichtung (1) nach Anspruch 5 oder 6, **dadurch gekennzeichnet, dass** der Schutzkörper (7) an einer der Innenfläche (12) gegenüberliegenden Außenfläche (13) zumindest eine Versteifungsrippe (14, 14') aufweist.

8. Sicherheitsvorrichtung (1) nach einem der Ansprüche 1 bis 7, **dadurch gekennzeichnet, dass** an der Umlenkrolle (3) eine Berieselungseinheit (15) angeordnet ist.

9. Sicherheitsvorrichtung (1) nach Anspruch 8, **dadurch gekennzeichnet, dass** die Berieselungseinheit (15) zumindest teilweise in den Schutzkörper (7) integriert ist.

10. Sicherheitsvorrichtung (1) nach einem der Ansprüche 1 bis 9, **dadurch gekennzeichnet, dass** zumindest ein an der Mantelfläche der Umlenkrolle (3) angelagerter Abstreifer (16) vorgesehen ist, welcher vorzugsweise am Schutzkörper (7) befestigt ist und gegebenenfalls einen stabilen Schaber und/oder eine flexible Reinigungsstruktur, wie etwa ein Reinigungsvlies oder einen Reinigungsschwamm aufweist.

11. Sicherheitsvorrichtung (1) nach einem der Ansprüche 1 bis 10, **dadurch gekennzeichnet, dass** der Einzugsschutz (9) einen im Wesentlichen keilförmigen Querschnitt aufweist, deren Spitze zur Gefahrenstelle (10) hin ausgerichtet ist.

12. Sicherheitsvorrichtung (1) nach einem der Ansprüche 1 bis 11, **dadurch gekennzeichnet, dass** der Einzugsschutz (9) an der der Gefahrenstelle (10) abgewandten Seite eine Anschlagsfläche (17) ausbildet.

13. Sicherheitsvorrichtung (1) nach Anspruch 12, **dadurch gekennzeichnet, dass** die Anschlagsfläche (17) mit dem laufenden Gut (4) einen Winkel zwischen 60° und 120°, insbesondere zwischen 80° und 100°, einschließt, wobei der Winkel vorzugsweise 90° beträgt.

14. Sicherheitsvorrichtung (1) nach einem der Ansprüche 1 bis 13, **dadurch gekennzeichnet, dass** die Bruchfestigkeit des Schutzkörpers (7) auf das Abschaltmoment eines Antriebs der Umlenkrolle (3) ausgelegt ist, wobei im Falle einer mechanischen Verklemmung zwischen Umlenkrolle (3) und Schutzkörper (7), etwa aufgrund eines Wicklers des laufenden Gutes (4), das Abschaltmoment erreicht wird, bevor die Bruchfestigkeit des Schutzkörpers (7) überschritten wird.

15. Transporteinheit (2) mit einer Sicherheitsvorrichtung (1) nach einem der Ansprüche 1 bis 14.
